# EUROPÄISCHE PATENTSCHRIFT

(11) **EP 0 501 118 B1**
(45) Veröffentlichungstag und Bekanntmachung des Hinweises auf die Patenterteilung: **02.12.1998**
(21) Anmeldenummer: 92100545.0
(22) Anmeldetag: 15.01.1992
(51) Int. Cl.: A61C 13/20, F24C 15/08

(54) **Dentalofen**
Dental oven
Four dentaire

(30) Priorität: 25.02.1991 DE 4105845
(43) Veröffentlichungstag der Anmeldung: 02.09.1992
(73) Patentinhaber: Heraeus Kulzer GmbH, 63450 Hanau (DE)
(72) Erfinder: Oppawsky, Steffen, W-6380 Bad Homburg (DE); Gernhard, Peter, W-6382 Friedrichsdorf (DE)
(74) Vertreter: Kühn, Hans-Christian

(56) Entgegenhaltungen:
- EP-A- 0 110 143
- WO-A-89/01921
- DE-A- 3 146 390
- Produktinformation der Kulzer GmbH "Silicoater MD, das Kulzer Silicoater-Verfahren zur Herstellung eines spaltfreien Kunststoff-Metall-Verbundes in der Zahnheilkunde" (90 590/D 260 S K dt)

## Beschreibung

Die Erfindung betrifft einen Dentalofen zur Wärmebehandlung von dentalen Werkstoffen und Dentalteilen bei Temperaturen über 100°C, insbesondere zum Einbrennen, mit einem isolierten Ofenraum, der durch eine Tür verschließbar ist, wobei der Ofenraum ein Gehäuse aufweist, das in einem Innengehäuse aus Metall aufgehängt ist, das seinerseits von einem mehrteiligen Außengehäuse getragen wird, wobei die Ofentür am Innengehäuse schwenkbar befestigt ist.

Ein derartiger Dentalofen ist aus der Produktinformation der Kulzer GmbH "Silicoater MD, das Kulzer Silicoater-Verfahren zur Herstellung eines spaltfreien Kunststoff-Metall-Verbundes in der Zahnheilkunde" (90 590/D 260 S K dt) bekannt.

Solche Öfen werden zum Einbrennen von Dentalmaterialien unter Temperaturen bis zu 400°C eingesetzt. Die bekannten Öfen besitzen einen Ofenraum, der an der Vorderfront, die auch die Tür aufnimmt, aufgehängt ist. Zwischen dem Ofenraum und der Vorderfront ist ein Rahmen aus Aluminium als Zwischenteil eingefügt. Das eigentliche Gehäuse besteht aus einem Innengehäuse aus Blech, das seinerseits von einem Außengehäuse aus Blech verkleidet ist. Das Innen- und das Außengehäuse liegen an ihren Verbindungsstellen flächig aufeinander. Hierdurch ist ein Wärmeübergang vom Innengehäuse auf das Außengehäuse gegeben, der dazu führt, daß sich das Außengehäuse stark aufheizt. Um eine zu starke Erwärmung an der Vorderfront (Frontwand) zu vermeiden, ist an der Vorderfront zwischen dem Innengehäuse und dem Außengehäuse zusätzlich ein Isolationsmaterial, beispielsweise Glaswolle, eingefügt. Die gleichen Maßnahmen, d. h. Isolierungsteile, sind an der Oberseite des Gehäuses und an einer Seitenwand, die die elektronischen Steuereinheiten des Ofens aufnimmt, vorgesehen. Um die Wärme aus dem Innenraum abzuführen, sind an der Oberseite und an der Rückseite des Gehäuses Luftschlitze vorhanden. Diese Dentalöfen haben sich im Einsatz gut bewährt. Sie sind allerdings durch den aufwendigen Gehäuseaufbau in der Herstellung teuer und bringen durch die starke Aufwärmung gewisse Nachteile mit sich, insbesondere auch dahingehend, daß die Umgebung des Ofens erwärmt wird. Gerade im Dentallabor, wo auch Kunststoffmaterialien verarbeitet werden, die unter dem Einfluß von Wärme aushärten, kann diese Wärmeabgabe nachteilig sein.

Der Erfindung liegt die Aufgabe zugrunde, einen Dentalofen zur Wärmebehandlung von dentalen Werkstoffen und Dentalteilen anzugeben, der einen einfachen, kostengünstigen und leichten Aufbau aufweist und den Anforderungen im Temperaturbereich bis 400°C an einen solchen Einbrennofen gerecht wird.

Die Aufgabe wird bei einem Dentalofen der eingangs beschriebenen Art dadurch gelöst, daß das Außengehäuse aus Kunststoffteilen gebildet ist, die frei schwebend über Haltestege mit dem Innengehäuse verbunden sind, wobei die Kunststoffteile schalenförmig derart ausgebildet sind, daß mindestens deren Seitenwände einen Hohlraum zu dem Innengehäuse umschließen. Bei einem solchen Dentalofen wird das tragende Gehäuse durch das Innengehäuse aus Metall gebildet. An dieses Innengehäuse werden die schalenförmigen Kunststoffteile, aus denen sich das Außengehäuse zusammensetzt, über einfache Stege, die an den Kunststoffteilen angespritzt sein können, befestigt. Durch die Ausbildung der einzelnen Kunststoffteile in Form von Schalen, d. h. mit zumindest teilweise umlaufenden Rändern oder Seitenteilen, wird ein Hohlraum gebildet, der einen ausreichenden Abstand der eigentlichen Verkleidungsflächen zu den Wänden des Innengehäuses aus Metall gewährleistet. Zumindest die beiden Seitenwände und die obere Abdeckplatte oder Abdeckung des Außengehäuses sind bei einem solchen Aufbau als identische Teile herstellbar, wobei die Seitenteile entweder der beiden Seitenwände oder aber der Abdeckung gleichzeitig einen Teil des sichtbaren äußeren Gehäuses bilden. Gegen diese Kunststoffteile, d. h. gegen die beiden Seitenwände und die obere Abdeckung, können sich die Frontwand und die Rückwand anlehnen. Bevorzugt werden aber die Frontwand und die Rückwand mit der Frontwand des Innengehäuses und der Rückwand des Innengehäuses verschraubt, wobei zwischen diesen verschraubten Teilen, die ebenfalls in Form von schalenförmigen Kunststoffteilen ausgebildet sind, die Seitenwände und die Abdeckung verklemmt werden, die hierzu entsprechende steckbare Ränder oder Stege aufweisen können. Es hat sich herausgestellt, daß bei einem derartigen Aufbau des Dentalofens zusätzliche Isoliermaterialien zwischen dem Innengehäuse aus Metall und den einzelnen schalenförmigen Kunststoffteilen nicht erforderlich sind. Gegebenenfalls können in der Abdeckung und den beiden Seitenwänden als auch in der Rückwand Lüftungsschlitze vorgesehen werden, die jedoch nicht erforderlich sind.

Insbesondere sind zusätzliche Lüftungsschlitze nicht erforderlich, falls in der Rückwand des Außengehäuses ein rohrförmiges Trageteil, vorzugsweise als an die Rückwand angespritztes Kunststoffteil, angeordnet ist, das einen Lüfter aufnimmt. Um eine gute Luftführung zu gewährleisten, ragt dieses rohrförmige Trageteil durch eine entsprechende Ausnehmung in der Öffnung der Rückwand des Innengehäuses hindurch, wobei diese Öffnung in der Rückwand in ihrem Durchmesser größer ist als der Außendurchmesser des rohrförmigen Trageteiles, so daß hier kein direkter Wärmeübergang in Form von aneinander anliegenden Teilen entsteht. Mit diesem Lüfter wird eine zusätzliche Kühlung des Innenraumes des Dentalofens, in dem der eigentliche Ofenraum angeordnet ist, vorgenommen.

Eine weitere kritische Stelle für einen Wärmeübergang zwischen dem Innengehäuse aus Metall und dem Außengehäuse aus Kunststoff ist im Bereich der Zugangsöffnug des Innengehäuses und der Zugangsöffnung des Ofenraumgehäuses gegeben. Aus diesem Grund ist von Vorteil, in diesem Bereich ein isolierendes Rahmenteil anzuordnen, das die Ofenraumöffnung umschließt. Bevorzugt wird dieses Rahmenteil aus einem Faser-Zement-Teil gebildet, das im wesentlichen aus Glimmer, Quarz, Zement und Glasfasern besteht. Es hat sich gezeigt, daß mit einem solchen Rahmenteil eine ausreichende Isolierung zwischen Innengehäuse und Außengehäuse gegeben ist, so daß der noch vorhandene Wärmeübergang von dem Innengehäuse bzw. von dem Bereich des Ofenraumes auf das Außengehäuse aus Kunststoff vernachlässigbar klein ist.

Um das Innengehäuse möglichst leicht und einfach auszubilden, wird es aus einem Blech U-förmig gebogen, wobei die beiden Schenkel die Frontwand bzw. die Rückwand bilden, während das die beiden Schenkel verbindende Zwischenblech den Boden des Ofens bildet. Die Frontwand weist hierbei eine entsprechende Ofenraumöffnung auf, die mindestens der Öffnung des Ofenraumes entspricht, während die Rückwand, falls ein Lüfter in den Dentalofen eingebaut wird, einen entsprechenden Ausschnitt für die Aufnahme des rohrförmigen Trageteiles aus Kunststoff besitzt. Um die beiden schenkelförmigen Bleche, die die Frontwand und die Rückwand bilden, gegeneinander zu stabilisieren, können Zwischenbleche eingefügt werden, wobei an einem dieser Zwischenbleche, und zwar bevorzugt auf der Außenseite, die elektrischen und elektronischen Versorgungsteile, beispielsweise auf einer Platine, sowie das Netzteil angeordnet werden. Darüber hinaus kann, in einer bevorzugten und besonders einfachen und leichten Ausbildung, eine Verbindung der beiden Platten (Frontwand und Rückwand) durch Distanzstäbe erfolgen, die im oberen Bereich zwischen der Frontwand und der Rückwand verschraubt sind. Diese Distanzstäbe sind bevorzugt Profilstäbe mit einer oder mehreren in Längsrichtung verlaufenden Nuten, in die beispielsweise die umlaufenden Kanten des die Abdeckung bildenden schalenförmigen Kunststoffteiles eingesetzt werden,
so daß diese Abdeckung in ihrer Lage ohne zusätzliche Verschraubteile fixiert ist. Eine weitere Nut kann dazu dienen, entsprechende Kanten oder Ränder der schalenförmigen Kunststoffteile, die die Seitenwände bilden, aufzunehmen oder das Zwischenblech an seiner oberen Kante zu fixieren.

Weitere Einzelheiten und Merkmale der Erfindung ergeben sich aus den Unteransprüchen.

Eine bevorzugte Ausführungsform der Erfindung wird nachfolgend anhand der Zeichnungen näher erläutert.

In der Zeichnung zeigt
- Figur 1: eine perspektivische Ansicht eines Dentalofens mit geöffneter Ofentür und
- Figur 2: eine perspektivische Expolosionsdarstellung der einzelnen, sowohl das Innengehäuse, das Außengehäuse, die Ofentür als auch die den Ofenraum bildenden Bauteile.

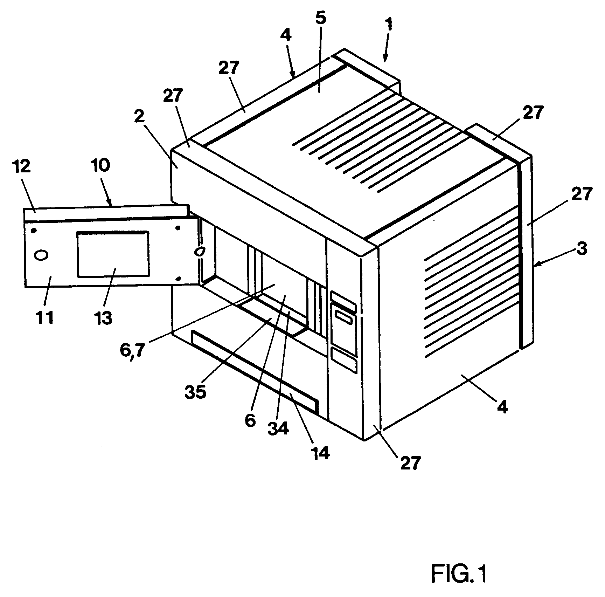

Der Dentalofen, wie ihn die Figur 1 zeigt, weist ein Außengehäuse 1 mit einer Frontwand 2, einer Rückwand 3, zwei Seitenwänden 4 und einer oberen Abdeckung 5 auf. Diese Teile, 2, 3, 4, 5 des Außengehäuses 1 sind aus Kunststoff in Form von schalenförmigen Kunststoffteilen gebildet. Die Frontwand 2 besitzt eine als Zugangsöffnung 6 zu dem Innenraum 7 eines Ofenraum-Gehäuses 8 eines Ofens 9 dienende Zugangsöffnung 6, die durch eine Ofentür 10 verschließbar ist. Diese Ofentür 10 besteht im wesentlichen aus drei Teilen, und zwar einer Trageplatte 11, die auf der Außenseite von einer Verblendung 12 abgedeckt ist, und einer die Zugangsöffnung 6 des Ofenraum-Gehäuses 8 verschließende Türplatte 13 aus Metall, die, in nicht näher dargestellter Weise, über Distanzstäbe von der Trageplatte 11 beabstandet ist. An der Unterseite der Frontwand 2 ist weiterhin ein ausziehbares Blech 14 vorgesehen, um im herausgezogenen Zustand vor dem Dentalofen eine Ablage zu bilden.

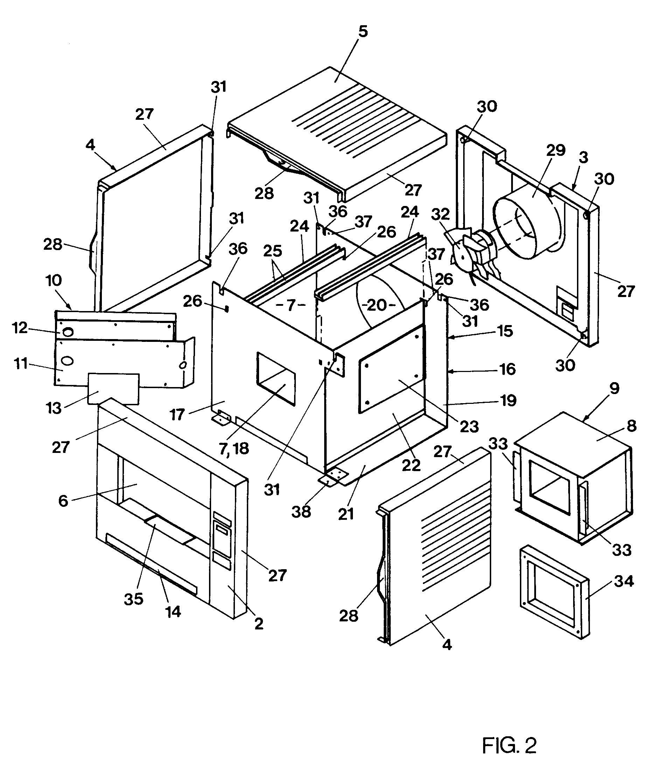

Wie die Figur 2 zeigt, bildet das tragende Element des Dentalofens ein Innengehäuse 15, das im wesentlichen aus einem U-förmig gebogenen Blech 16 gebildet ist, wobei die beiden, die Schenkel bildenden Teile des U-förmig gebogenen Bleches 16 die Frontwand 17 mit einer Ofenraumöffnung 18 und die Rückwand 19 mit einer kreisrunden Öffnung 20 bilden. Das Verbindungsblech 21, das die Frontwand 17 und die Rückwand 19 miteinander verbindet, bildet den Boden des Dentalofens. Frontwand 17 und Rückwand 19 werden durch ein Zwischenblech 22 miteinander verbunden, das seitlich, mit geringem Abstand zu den äußeren Seitenkanten nach innen verschoben, angeordnet ist. Auf diesem Zwischenblech 22 werden, und zwar auf dessen zur Außenseite hin gerichteten Seite, die elektrischen und elektronischen Versorgungseinrichtungen sowie das Netzteil des Dentalofens befestigt; hierzu kann beispielsweise, wie angedeutet, eine Leiterplatine 23 angeschraubt werden. Als weitere Stabilisierungshilfen sind die beiden die Schenkel des U-förmig gebogenen Bleches 16 bildenden Teile, d. h. die Frontwand 17 und die Rückwand 19, über Distanz-Stäbe 24 im Bereich ihrer oberen Kanten miteinander verbunden. Diese Distanz-Stäbe 24 weisen ein Profil mit in Längsrichtung verlaufenden Nuten 25 auf, wobei jeder der Distanz-Stäbe 24 an seiner oberen Seite zwei oder drei solcher Nuten 25 besitzt. Diese Distanz-Stäbe 24 sind einerseits auf in der Frontwand 17 und der Rückwand 19 nach innen in das Blech eingedrückten Sicken 26 aufgelegt, andererseits sind sie durch nicht dargestellte Schrauben von der Außenseite der Frontwand 17 und der Rückwand 19 verschraubt.

Sowohl die beiden die Seitenwände 4 des Außengehäuses 1 bildenden schalenförmigen Kunststoffteile als auch das die obere Abdeckung 15 bildende Kunststoffspritzteil weisen an drei ihrer Seitenkanten umlaufende bzw. umgebogene Seitenteile 27 auf, während die zu der Frontwand 2 hin gerichteten Seiten offen sind. An die Kanten dieser offenen Seitenteile 27 sind Stege 28 angespritzt. Sowohl die Frontwand 2 als auch die Rückwand 3 weisen umlaufend an allen Seitenkanten Seitenteile 27 auf, so daß sie eine geschlossene Schale bilden.

Im zusammengebauten Zustand können sich die Seitenteile 27 der oberen Abdeckung 5 jeweils in die weiter innenliegenden Nuten 25 der Distanzstäbe 24 einlegen. In die jeweils äußeren Nuten 25 der Distanzstäbe 24 werden jeweils die Seitenwände 4 mit einer entsprechenden Nut an der Innenseite der oberen Seitenteile 27 eingehängt, so daß sie sicher gehalten werden.

Die Rückwand 3, die in der Mitte ein rohrförmiges Trageteil 29 besitzt, ist über vier Haltestege 30 in den Eckbereichen in Bohrungen 30 der Rückwand 19 des Innengehäuses 15 verschraubt. Gleichzeitig werden mit diesen Schrauben bzw. Haltestegen 30 die beiden Seitenwände 4, die hierzu Schlitze 31 aufweisen, festgeklemmt. Diese Seitenwände 4 werden, um sie zu befestigen, mit Stegen 28 hinter die Seitenteile 27 der Frontwand 2 des Außengehäuses 1 gesteckt, so daß dort keine Befestigungsmittel wie Schrauben erforderlich sind, und an den hinteren Seitenteilen 27 mit den Schlitzen 31 hinter die Stege 30 bzw. die entsprechenden Befestigungsschrauben geschoben und mit verschraubt.

In einer besonders einfachen Befestigung der oberen Abdeckung 5 wird diese mit den Stegen 28 zwischen das Seitenteil 27 der Frontwand 2 des Außengehäuses 1 und der oberen Kante der Frontwand 17 des Innengehäuses 15 - zwischen diesen Teilen ist ein entsprechender Spalt gebildet - eingeschoben und in den hinteren Seitenteil 27 in weitere Schlitze 36 eingesteckt und zwar derart, daß die Seitenteile 27 direkt in den Schlitzen 36 der Rückwand 19 einliegen. An der vorderen Kante der Abdeckung 5 ist der Steg 28 auch in die Seitenteile 27 verlängert, wobei diese seitlichen Stege 28 in Schlitze 36 an der oberen Kante der Frontwand 17 anliegen. Vor Verschrauben der Rückwand 3 wird die obere Abdeckung 5 mit zwei Schrauben durch Bohrungen 37 von der Rückseite der Rückwand 19 verschraubt. Diese Befestigung gewährleistet einen nur geringen Wärmeübergang zwischen Teilen des Innengehäuses 15 und der oberen Abdeckung 5.

In das rohrförmige Trageteil 29 ist ein Lüfter 32 eingesetzt, der den Innenraum 7 des Innengehäuses 15 belüftet. Das rohrförmige Trageteil 29 ist derart in seinem Außendurchmesser in bezug auf die kreisrunde Öffnung 20 in der Rückwand 19 des Innengehäuses 15 dimensioniert, daß zwischen dem rohrförmigen Trageteil 29 und der kreisrunden Öffnung 20 keine Berührungspunkte entstehen.

Die Frontwand 2 des Außengehäuses 1 weist, ähnlich der Rückwand 3, Haltestege 30 auf (nicht sichtbar), die in entsprechenden Bohrungen 32 an der Frontwand 17 verschraubt sind. Gleichzeitig wird mit dem Verschrauben der Frontwand 2 an dem Innengehäuse 15 durch die Seitenteile 27 der Frontwand 2 an die an der oberen Abdeckung 5 und den beiden Seitenwänden 4 angespritzten Stege 28 übergriffen, so daß diese Teile auch an der vorderen Seite festgeklemmt werden. Zur Montage des Außengehäuses 1 müssen also lediglich die Frontwand 2 und die Rückwand 3 an dem U-förmig gebogenen Innengehäuse 15 mit jeweils vier Schrauben verschraubt werden, wobei an der unteren Seite des Innengehäuses 15 Hilfsbleche 38 angeschraubt sind. Damit an der Außenseite der Frontwand 2 des Außengehäuses 1 keine Schrauben sichtbar sind, wird zur Montage des Außengehäuses 1 zunächst die Frontwand 2 an der Frontwand 17 des Innengehäuses 15 verschraubt, anschließend die beiden Seitenwände 4 und die obere Abdeckung 15 mit deren Stegen 28 hinter die Seitenteile 27 der Frontwand 2 eingeschoben - hierzu sind ebenfalls Schlitze 31 zur Lageorientierung und späteren Klemmung in den Seitenteilen 27 vorhanden - dann die obere Abdeckung 5 über die Bohrungen 37 mit der Rückwand 19 verschraubt und zuletzt die Rückwand 3 von außen verschraubt, die dann die beiden Seitenwände 4 an ihren hinteren Enden fixiert.

Die schalenförmigen Teile 2,3,4,5 des Außengehäuses 1 bilden in ihrer frei schwebenden Anordnung an dem Innengehäuse 15 einen Hohlraum, der praktisch keinen direkten Wärmeübergang zwischen Außengehäuse 1 und Innengehäuse 15 bildet. Der Hohlraum bildet eine ausreichende Wärmeisolierung, so daß keine Isoliermaterialien in diesen Hohlraum eingebracht werden müssen.

Der eigentliche Ofen 9 wird mit zwei seitlichen Flanschen 33 an der Innenseite der Frontwand 17 des Innengehäuses 15 verschraubt, so daß er im Innenraum 7 des Innengehäuses 15 frei schwebend aufgehängt ist. Zwischen den Flanschen 33 und der Ofenraum-Öffnung 18 an der Frontwand 17 des Innengehäuses 15 ist ein isolierendes Rahmenteil 34 eingefügt, das eine Isolationsbrücke zwischen dem Ofen 9 und der Frontwand 17 des Innengehäuses 15 bildet. Dieses Rahmenteil 34 ist ein Faser-Zement-Rahmen, der aus Glimmer, Quarz, Zement und Glasfasern gebildet ist und sich sehr gut als Isolierteil eignet, da er einerseits eine sehr hohe Festigkeit und andererseits wärmebeständig und eine geringe Wärmeleitfähigkeit aufweist. Der Ofen 9 zeigt an der Vorderwand eine Temperatur von über 300°C. An dem Ofenraum-Gehäuse 8 werden Temperaturen von bis zu 100°C erreicht. Die Zugangsöffnung 6 in der Frontwand 2, die ebenfalls durch Seitenteile 27, die entsprechend den äußeren Seitenteilen 27 einen Rahmen bilden, umrandet ist, ist, um sie vor Beschädigungen durch aus dem Ofen herausgenommene Dentalteile zu schützen, auf dem unteren Seitenteil 27 mit einer Metallplatte 35 belegt.

Wie die Figur 2 deutlich zeigt, sind in dem vorstehend beschriebenen Aufbau die beiden Seitenwände 4 und die obere Abdeckung 5 baugleich, wodurch der Fertigungsaufwand wesentlich herabgesetzt wird, da für das gesamte Außengehäuse 1 nur drei verschiedene Kunststoffspritzteile, abgesehen von der Verblendung 12 der Tür, erforderlich sind.

## Patentansprüche

1. Dentalofen zur Wärmebehandlung von dentalen Werkstoffen und Dentalteilen bei Temperaturen über 100°C, insbesondere zum Einbrennen, mit einem isolierten Ofenraum, der durch eine Tür verschließbar ist, wobei der Ofenraum ein Gehäuse aufweist, das in einem Innengehäuse aus Metall aufgehängt ist, das seinerseits von einem mehrteiligen Außengehäuse getragen wird, wobei die Ofentür am Innengehäuse schwenkbar befestigt ist, dadurch gekennzeichnet, daß das Außengehäuse (1) eine Frontwand (2), eine Rückwand (3), zwei Seitenwände (4) und eine obere Abdeckung (5) aufweist und aus Kunststoffteilen gebildet ist, die frei schwebend über Haltestege (30) mit dem Innengehäuse (15), das eine Frontwand (17), eine Rückwand (19) und ein den Boden des Dentalofens bildendes Verbindungsblech (21) aufweist, verbunden sind, wobei die Kunststoffteile schalenförmig derart ausgebildet sind, daß mindestens deren Seitenwände (4) einen Hohlraum zu dem Innengehäuse (15) umschließen.

2. Dentalofen nach Anspruch 1, dadurch gekennzeichnet, daß in der Rückwand (3) des Außengehäuses (1) ein rohrförmiges Trageteil (29) angeordnet ist, das einen Lüfter (32) aufnimmt, wobei das rohrförmige Trageteil (29) durch eine Ausnehmung in der Rückwand (19) des Innengehäuses (15) hindurchführt.

3. Dentalofen nach Anspruch 1 oder 2, dadurch gekennzeichnet, daß zwischen der Zugangsöffnung des Innengehäuses (15) und der Zugangsöffnung des Ofenraum-Gehäuses (8) ein Rahmenteil (34) angeordnet ist, das die Ofenraumöffnung (18) umschließt.

4. Dentalofen nach Anspruch 3, dadurch gekennzeichnet, daß das Rahmenteil (34) ein Faser-Zement-Teil aus Glimmer, Quarz, Zement und Glasfasern ist.

5. Dentalofen nach einem der Ansprüche 1 bis 4, dadurch gekennzeichnet, daß das Innengehäuse (15) U-förmig ausgebildet ist, wobei die beiden die Schenkel bildenden Teile die Frontwand (17) und die Rückwand (19) bilden, und das Zwischenblech (22) den Boden des Ofens (9) bildet.

6. Dentalofen nach Anspruch 5, dadurch gekennzeichnet, daß die beiden die Schenkel bildenden Teile im Bereich ihrer freien Kanten über einen Distanzstab (24) miteinander verbunden sind.

7. Dentalofen nach Anspruch 6, dadurch gekennzeichnet, daß die Distanzstäbe (24) Nuten (25) aufweisen, in denen das die obere Abdeckung (5) und/oder die die Seitenwände (4) bildenden Kunststoffteile des Außengehäuses (1) eingehängt sind.

8. Dentalofen nach einem der Ansprüche 1 bis 7, dadurch gekennzeichnet, daß die Seitenwände (4) und/oder die Abdeckung (5) an jeweils einer ihrer Seitenteile (27) zwei Schlitze aufweisen, die Auflagen an dem Innengehäuse (15) bilden.

9. Dentalofen nach einem der Ansprüche 1 bis 8, dadurch gekennzeichnet, daß die Seitenwände (4) und/oder die Abdeckung (5) an jeweils einer ihrer Seitenteile (27) einen Steg (28) aufweisen, der jeweils ein Seitenteil (27) der Seitenwände (4) oder der Abdeckung (5) hintergreift.

10. Dentalofen nach Anspruch 8 und 9, dadurch gekennzeichnet, daß die Schlitze (31) und der Steg (28) an gegenüberliegenden Seitenkanten (27) angeordnet sind.

11. Dentalofen nach einem der Ansprüche 9 und 10, dadurch gekennzeichnet, daß die Schlitze (31) in den Seitenteilen (27) angeordnet sind, die zur Rückwand (3) hin gerichtet sind.

12. Dentalofen nach einem der Ansprüche 1 bis 11, dadurch gekennzeichnet, daß die obere Abdeckung (5) und die beiden Seitenwände (4) des Außengehäuses (1) baugleiche Teile sind.

## Claims

1. A dental oven for the thermal treatment of dental materials and dental pieces at temperatures above 1000 C, in particular for burning in, with an insulated oven chamber which is closable by a door, in which the oven chamber has a housing which is suspended in an internal housing of metal, which in turn is carried by a multiple-part external housing, in which the oven door is hingedly secured on the internal housing, characterised in that the external housing (1) has a front wall (2), a rear wall (3), two side walls (4) and an upper covering (5) and is formed from plastic parts which, freely suspended, are connected via holding cross-pieces (30) with the internal housing (15) which has a front wall (17), a rear wall (19) and a connecting sheet (21) forming the base of the dental oven, in which the plastic parts are constructed in a shell form such that at least their side walls (4) surround a cavity to the internal housing (15).

2. The dental oven according to Claim 1, characterised in that in the rear wall (3) of the external housing (1) a tube-shaped supporting piece (29) is arranged which receives a fan (32), in which the tube-shaped supporting piece (29) passes through an aperture in the rear wall (19) of the internal housing (15).

3. The dental oven according to Claim 1 or 2, characterised in that between the access opening of the internal housing (15) and the access opening of the oven chamber housing (8) a frame piece (34) is arranged which surrounds the oven chamber opening (18).

4. The dental oven according to Claim 3, characterised in that the frame piece (34) is a fibre/cement piece of mica, quartz, cement and glass fibres.

5. The internal housing (15) is constructed in a U-shape, in which the two parts forming the shanks form the front wall (17) and the rear wall (19), and the intermediate sheet (22) forms the base of the oven (9).

6. The dental oven according to Claim 5, characterised in that the two pieces forming the shanks are connected with each other in the region of their free edges by means of a spacer bar (24).

7. The dental oven according to Claim 6, characterised in that the spacer bars (24) have grooves (25) in which the plastic pieces of the outer housing (1), forming the upper covering (5) and/or the side walls (4), are suspended.

8. The dental oven according to any of Claims 1 to 7, characterised in that the side walls (4) and/or the covering (5) have two slits on one of their side pieces (27) respectively, which slits form supports on the internal housing (15).

9. The dental oven according to any of Claims 1 to 8, characterised in that the side walls (4) and/or the covering (5) have on one of their side pieces (27) respectively a cross-piece (28) which engages behind a respective side piece (27) of the side walls (4) or of the covering (5).

10. The dental oven according to Claim 8 and 9, characterised in that the slits (31) and the cross-piece (28) are arranged on opposite side edges (27).

11. The dental oven according to any of Claims 9 and 10, characterised in that the slits (31) are arranged in the side pieces (27) which are directed towards the rear wall (3).

12. The dental oven according to any of Claims 1 to 11, characterised in that the upper covering (5) and the two side walls (4) of the outer housing (1) are structurally identical parts.

## Revendications

1. Four dentaire pour le traitement thermique de matériaux dentaires et de pièces dentaires à des températures supérieures à 100°C, en particulier pour la cuisson, comportant un espace four isolé qu'une porte peut obturer, dans lequel l'espace four présente une enceinte qui est suspendue dans une enceinte intérieure en métal qui de son côté est portée par une enceinte extérieure en plusieurs pièces, dans lequel la porte du four est fixée, avec liberté de pivotement, à l'enceinte intérieure, caractérisé par le fait que l'enceinte extérieure (1) présente une paroi avant (2), une paroi arrière (3), deux parois latérales (4) et un couvercle supérieur (5) et qu'elle est formée de pièces en plastique qui sont reliées, en flottement libre, par l'intermédiaire de tétons de maintien (30), à l'enceinte intérieure (15) qui présente une paroi avant (17), une paroi arrière (19) et une tôle de liaison (21) formant le plancher du four dentaire, les pièces en plastique ayant la forme de cuvettes telles qu'au moins leurs parois latérales (4) enclosent un espace creux en direction de l'enceinte intérieure (15).

2. Four dentaire selon la revendication 1, caractérisé par le fait que dans la paroi arrière (3) de l'enceinte extérieure (1) est disposé un support tubulaire (29) qui reçoit un ventilateur (32), le support tubulaire (29) passant par un évidement prévu dans la paroi arrière (19) de l'enceinte intérieure (15).

3. Four dentaire selon la revendication 1 ou 2, caractérisé par le fait qu'entre l'ouverture d'accès de l'enceinte intérieure (15) et l'ouverture d'accès de l'enceinte (8) de l'espace four est disposé un cadre (34) qui entoure l'ouverture (18) de l'espace four.

4. Four dentaire selon la revendication 3, caractérisé par le fait que le cadre (34) est une pièce en fibre-ciment, constituée de mica, de quartz, de ciment et de fibres de verre.

5. Four dentaire selon une des revendications 1 à 4, caractérisé par le fait que l'enceinte intérieure (15) a la forme d'un U, les deux parties formant les ailes formant la paroi avant (17) et la paroi arrière (19) et la tôle intermédiaire (22) formant le plancher du four (9).

6. Four dentaire selon la revendication 5, caractérisé par le fait que les deux parties formant les ailes sont reliées l'une à l'autre dans la zone de leurs arêtes libres par l'intermédiaire d'un barreau écarteur (24).

7. Four dentaire selon la revendication 6, caractérisé par le fait que les barreaux d'écartement (24) présentent des rainures (25) dans lesquelles sont suspendus le couvercle supérieur (5) et/ou les parties en plastique formant les parois latérales (4) de l'enceinte extérieure (1).

8. Four dentaire selon l'une des revendications 1 à 7, caractérisé par le fait que les parois latérales (4) et/ou le couvercle (5) présentent, sur chaque fois l'une de leurs parties latérales (27), deux fentes qui forment les appuis sur l'enceinte intérieure (15).

9. Four dentaire selon l'une des revendications 1 à 8, caractérisé par le fait que les parois latérales (4) ou le couvercle (5) présentent, sur chaque fois l'une de leurs parties latérales (27) une oreille (28) qui saisit chaque fois par derrière une partie latérale (27) des parois latérales (4) ou du couvercle (5).

10. Four dentaire selon les revendications 8 et 9, caractérisé par le fait que les fentes (31) et l'oreille (28) sont disposées sur des arêtes latérales (27) situées en face l'une de l'autre.

11. Four dentaire selon l'une des revendications 9 et 10, caractérisé par le fait que les fentes (31) sont disposées dans les parties latérales (27) qui sont orientées vers la paroi arrière (3).

12. Four dentaire selon l'une des revendications 1 à 11, caractérisé par le fait que le couvercle supérieur (5) et les deux parois latérales (4) de l'enceinte extérieure (1) sont des pièces identiques.
